# EUROPEAN PATENT APPLICATION

(11) **EP 4 529 315 A1**
(43) Date of publication of application: **26.03.2025**
(21) Application number: 23807035.3
(22) Date of filing: 18.05.2023
(51) Int. Cl.: H04W 72/04

(54) **RESOURCE CONFIGURATION METHOD AND APPARATUS, TERMINAL, BASE STATION, AND STORAGE MEDIUM**

(30) Priority: 18.05.2022 CN 202210547541
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HU, Lijie, Beijing 100032 (CN); WANG, Fei, Beijing 100032 (CN); KE, Ting, Beijing 100032 (CN)
(74) Representative: Maiwald GmbH
(86) International application number: PCT/CN2023/095062
(87) International publication number: WO 2023/222085

(57) **Abstract**

The present disclosure provides a resource configuration method and apparatus, a terminal, a base station, and a storage medium. The method comprises: a terminal receives a first configuration delivered by a base station, wherein the first configuration comprises at least one first TDD uplink/downlink configuration applied to a first sub-band resource; and the terminal further receives a second TDD uplink/downlink configuration delivered by the base station, wherein the second TDD uplink/downlink configuration represents a cell specific TDD uplink/downlink configuration.

## Description

### CROSS-REFERENCE TO RELATED APPLICATIONS

The application claims priority to Chinese Patent Application No. 202210547541.0, filed on May 18, 2022, the entire contents of which are incorporated herein by reference.

### TECHNICAL FIELD

The present disclosure relates to a field of wireless technology, and specifically to a method and an apparatus for resource configuration, a terminal, a base station, and a storage medium.

### BACKGROUND

In the related art, after a terminal (also called as user equipment, UE) accesses a cell, the terminal may receive a cell specific Time Division Duplexing (TDD)-uplink (UL)-downlink (DL) configuration, or a TDD frame structure configuration. However, UL and DL transmissions in a full-duplex mode may not be achieved via this configuration for the terminal. That is, the situation may not be achieved where transmitting on a part of frequency domain resources and receiving on other part of frequency domain resources within a same cell may not be realized in a same slot, or the situation may not be achieved where transmitting and receiving on same frequency domain resources may not be realized in the same slot.

### SUMMARY

To solve the above technical problems, the embodiments of the disclosure provide a method and an apparatus for resource configuration, a terminal, a base station, and a storage medium.

The technical solutions of the present disclosure are described as follows.

The embodiments of the disclosure provide a method for resource configuration, performed by a terminal, including: receiving a first configuration sent by a base station, in which the first configuration includes at least one first time division duplex (TDD)-uplink (UL)-downlink (DL) configuration applied to a first sub-band resource; and receiving, by the terminal, a second TDD-UL-DL configuration sent by the base station, in which the second TDD-UL-DL configuration represents a cell specific TDD-UL-DL configuration.

In the above solution, the terminal applies the second TDD-UL-DL configuration to second sub-band resource, and the second sub-band resource represents a sub-band resource in a cell other than the first sub-band resource.

In the above solution, the first sub-band resource includes a cell specific sub-band resource or a UE specific sub-band resource.

In the above solution, the first sub-band resource is located inside a bandwidth part (BWP); or, the first sub-band resource is located outside the BWP.

In the above solution, the first configuration further includes a slot offset value, in which the slot offset value represents a slot offset of a period starting position of the first TDD UL-DL configuration with respect to a period starting position of the second TDD UL-DL configuration.

In the above solution, receiving the first configuration sent by the base station includes: receiving the first configuration sent by the base station via a system message or a radio resource control (RRC) signaling.

In the above solution, the first configuration further includes at least one first BWP associated with the first sub-band resource; when an active BWP of the terminal is the first BWP, the terminal applies the first TDD-UL-DL configuration to the first sub-band resource and applies the second TDD-UL-DL configuration to the first BWP.

In the above solution, the first sub-band resource is overlapped with a frequency domain resource of the first BWP.

The embodiments of the disclosure also provide a method for resource configuration, performed by a base station. The method includes: sending a first configuration to a terminal, in which the first configuration includes at least one first TDD-UL-DL configuration applied to a first sub-band resource; and sending, by the base station, a second TDD-UL-DL configuration to the terminal, in which the second TDD-UL-DL configuration represents a cell specific TDD-UL-DL configuration.

In the above solution, the terminal applies the second TDD-UL-DL configuration to a second sub-band resource, and the second sub-band resource represents a sub-band resource in a cell other than the first sub-band resource.

In the above solution, the first sub-band resource includes a cell specific sub-band resource or a UE specific sub-band resource.

In the above solution, the first sub-band resource is located inside a BWP; or, the first sub-band resource is located outside the BWP.

In the above solution, the first configuration further includes a slot offset value, in which the slot offset value represents a slot offset of a slot offset value, and the slot offset value represents a slot offset of a period starting position of the first TDD-UL-DL configuration with respect to a period starting position of the second TDD-UL-DL configuration.

In the above solution, sending the first configuration to the terminal includes: sending the first configuration to the terminal via a system message or an RRC signaling.

In the above solution, the first configuration further includes at least one first BWP associated with the first sub-band resource; when an active BWP of the terminal is the first BWP, the terminal applies the first TDD-UL-DL configuration to the first sub-band resource and applies the second TDD-UL-DL configuration to the first BWP.

In the above solution, the first sub-band resource is overlapped with a frequency domain resource of the first BWP.

The embodiments of the disclosure also provide an apparatus for resource configuration, including a first receiving unit. The first receiving unit is configured to receive a first configuration sent by a base station, in which the first configuration includes at least one first TDD-UL-DL configuration applied to a first sub-band resource; and the first receiving unit is further configured to receive a second TDD-UL-DL configuration sent by the base station, in which the second TDD-UL-DL configuration represents a cell specific TDD-UL-DL configuration.

The embodiments of the disclosure also provide an apparatus for resource configuration, including a first sending unit. The first sending unit is configured to send a first configuration to a terminal, in which the first configuration includes at least one first TDD-UL-DL configuration applied to a first sub-band resource; and the first sending unit is further configured to send a second TDD-UL-DL configuration to the terminal, in which the second TDD-UL-DL configuration represents a cell specific TDD-UL-DL configuration.

The embodiments of the disclosure also provide a terminal, including a first processor and a communication interface. The first communication interface is configured to receive a first configuration sent by a base station, in which the first configuration includes at least one first TDD-UL-DL configuration applied to a first sub-band resource; and the first communication interface is further configured to receive a second TDD-UL-DL configuration sent by the base station, in which the second TDD-UL-DL configuration represents a cell specific TDD-UL-DL configuration.

The embodiments of the disclosure also provide a base station, including a second processor and a second communication interface. The second communication interface is configured to send a first configuration to a terminal, in which the first configuration includes at least one first TDD-UL-DL configuration applied to a first sub-band resource; and the second communication interface is further configured to send a second TDD-UL-DL configuration to the terminal, and the second TDD-UL-DL configuration represents a cell specific TDD-UL-DL configuration.

The embodiments of the disclosure also provide a terminal, including a first processor and a first memory for storing a computer program that can be executed by the processor. When the computer program is executed by the first processor, the steps of any of the above methods on the terminal side are executed.

The embodiments of the disclosure also provide a base station, including a second processor and a second memory for storing a computer program that can be executed by the processor. When the computer program is executed by the second processor, the steps of any of the above methods on the base station side are executed.

The embodiments of the disclosure also provide a storage medium on which a computer program is stored. When the computer program is executed by a processor, the steps of any of the above methods on the terminal side or the steps of any of the above methods on the base station side are executed.

According to the method and the apparatus for resource configuration, the terminal, the base station, and the storage medium in the embodiments of the disclosure, the terminal receives the first configuration sent by the base station, in which the first configuration includes at least one first TDD-UL-DL configuration applied to the first sub-band resource; and the terminal further receives the second TDD-UL-DL configuration sent by the base station, in which the second TDD-UL-DL configuration represents a cell specific TDD-UL-DL configuration. In this way, the terminal is configured with different TDD-UL-DL configurations, corresponding to different sub-band resources. Based on this, the base station can carry out UL and DL transmissions simultaneously on different sub-bands of a TDD carrier, thus improving the UL coverage performance of the user.

### BRIEF DESCRIPTION OF THE DRAWINGS

FIG. 1 is a diagram of a cell specific TDD UL-DL configuration in the related art.
FIG. 2 is a flowchart of a method for resource configuration according to embodiments of the disclosure.
FIG. 3 is a schematic diagram of a resource configuration according to embodiments of the disclosure.
FIG. 4 is another schematic diagram of the resource configuration according to embodiments of the disclosure.
FIG. 5 is a third schematic diagram of the resource configuration according to embodiments of the disclosure.
FIG. 6 is a fourth schematic diagram of the resource configuration according to embodiments of the disclosure.
FIG. 7 is a fifth schematic diagram of the resource configuration according to embodiments of the disclosure.
FIG. 8 is another flowchart of another method for resource configuration according to embodiments of the disclosure.
FIG. 9 is a structural diagram of an apparatus for resource configuration according to embodiments of the disclosure.
FIG. 10 is another structural diagram of another apparatus for resource configuration according to embodiments of the disclosure.
FIG. 11 is a structural diagram of a terminal according to embodiments of the disclosure.
FIG. 12 is a structural diagram of a base station according to embodiments of the disclosure.

### DETAILED DESCRIPTION

In a time division duplex (TDD) transmission mode, UL and DL operates at a same frequency, UL and DL adopts time division duplex, and neither UL nor DL may obtain consecutive transmission opportunities. In consideration of a low transmission power of the terminal, less UL slots are configured in a macro network deployment, which limits the UL transmission opportunities and leads to a limited transmission rate for edge users. With a high requirement for UL transmission rate in various services, such as data collection, monitoring, and online games in an Internet of Things (IoT) scenarios, the UL transmission rate needs to be further improved, and with the introduction of services such a high-definition video calling service and an Extended Reality (XR) service, a high requirement for a service delay is also proposed. Therefore, a UL coverage performance of the terminal needs to be further improved, the service delay needs to be decreased, and the UL transmission rate needs to be increased.

By enabling UL and DL transmissions in a TDD band simultaneously, full duplex technology reduces the transmission delay and improves the spectrum efficiency. The full-duplex technology mainly developed at this stage includes a sub-band wise full duplex and a frequency fully overlapped full duplex. In the sub-band full duplex technology, the next generation NodeB (gNB) can use different sub-bands for UL and DL transmissions simultaneously, and the terminal does not need to support a simultaneous transmission, which is still a half-duplex terminal. In the Frequency fully overlapped full duplex technology, the gNB can transmit and receive simultaneously on same frequency resources, and the terminal can only have a capability of half-duplex. The Full duplex technology puts forward higher requirements for terminals and base stations. In order to support the above full duplex technology of sub-band wise full duplex and frequency fully overlapped full duplex, it is necessary to enhance the TDD frame structure configuration. In the related art, after a terminal accesses a cell, TDD-UL-DL-ConfigComm may be received in a System Information Block (SIB) 1 message. This configuration information is cell specific information, applicable to all terminals, and a period length of the TDD frame structure and a slot distribution of the UL and DL within the period are specified. For the cell specific TDD frame structure configuration, the configured UL-DL transmission direction starts with a DL transmission and ends with a UL transmission within a period. The time domain resources that are not configured between the DL and UL transmissions are flexible resources. In addition to the cell specific TDD frame structure configuration, there is also a terminal-dedicated TDD frame structure configuration, that is, configuring TDD-UL-DL-ConfigurationDedicated in servingcellconfig to further configure the UL and DL with flexible slots. However, the above TDD frame structure configuration may not realize a simultaneous UL and DL transmission within a TDD carrier, which limits the flexibility of the configuration and is not conducive to decreasing the delay and improving the UL coverage performance. If both UL and DL transmissions may be configured in the same slots, the UL transmission may occur in each slot for services that require more UL transmissions, so as to reduce the delay. In addition, consecutive UL resources may be used for repeated transmission to improve the UL coverage.

Based on this, in embodiments of the present disclosure, the terminal receives the first configuration sent by the base station, in which the first configuration includes at least one first TDD-UL-DL configuration applied to the first sub-band resource; in addition, the terminal also receives the second TDD-UL-DL configuration sent by the base station, the second TDD-UL-DL configuration represents a cell specific TDD-UL-DL configuration. In this way, the terminal is configured with different TDD-UL-DL configurations, corresponding to different sub-band resources. Based on this, the base station may carry out UL and DL transmissions simultaneously on different sub-bands of a TDD carrier, thus improving the UL coverage performance of the user.

The detailed description of the disclosure is further made in conjunction with the attached drawings and embodiments.

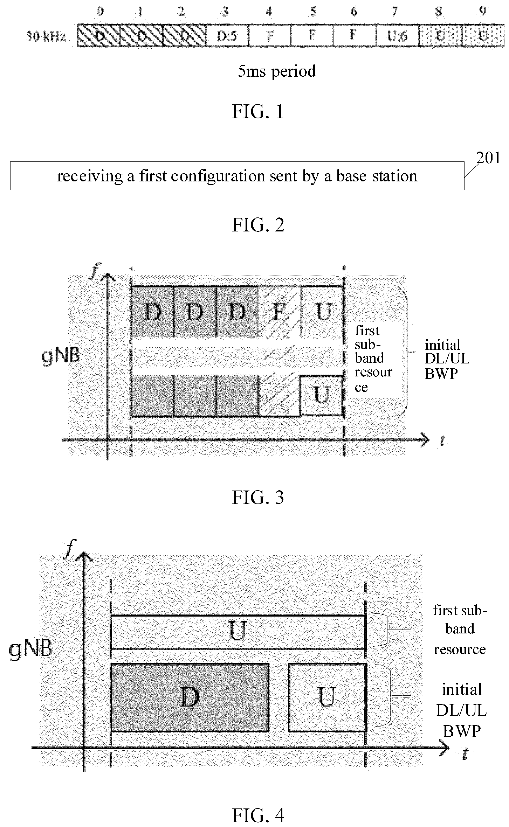

First, a TDD-UL-DL configuration for the 5th Generation (5G) mobile communication technology is described. First of all, 5G UL-DL configuration supports more types of UL-DL switching periods, including semi-static UL-DL switching periods such as 0.5ms, 1ms, 2ms, 5ms and 10ms, and additionally supports UL-DL switching periods such as 0.625ms (applicable to a 120kHz subcarrier interval), 1.25ms (applicable to 60kHz and 120kHz subcarrier intervals) and 2.5ms (applicable to 30kHz, 60kHz and 120kHz subcarrier intervals). The terminal receives TDD-UL-DL-ConfigComm in the SIB 1 message. The configuration parameters include a UL-DL switching period, a reference subcarrier interval, and a UL-DL transmission configuration. The value of the UL-DL switching period is {0.5, 0.625, 1, 1.25, 2, 2.5, 5, 10}ms. The range value of the reference subcarrier interval is 15kHz, 30kHz or 60kHz for bands below 6GHz, and is 60kHz or 120kHz interval for bands above 6GHz. Based on the configured reference subcarrier interval and the UL-DL switching period, a number of slots contained in each period can be determined. Further, a ratio of UL transmissions to DL transmissions in the UL-DL switching period may be determined based on the UL-DL transmission configuration. The UL-DL transmission configuration, including a slot configuration and a symbol configuration during UL and DL transmissions, is indicated by four parameters x1, y1, x2, and y2. Taking FIG. 1 as an example, the reference subcarrier interval is 30kHz, and the UL-DL period is 5ms, then it can be determined that each period contains 10 slots. The first three slots corresponding to x1=3, x2=5, y1=2, y2=6, are all DL slots, and the corresponding last two slots are all UL slots. The first five symbols of slot 3 are DL slots, represented by D, the last six symbols of slot 7 are UL slots, represented by U, and the slots and symbols between the slot 3 and the slot 7 are flexible slots and flexible symbols, represented by F.

In order to further improve the UL coverage performance of the terminal, reduce the service delay, and increase the UL transmission rate, the embodiments of the disclosure provides a method for resource configuration applicable to the terminal. Referring to FIG. 2, the method includes the following step at 201.

At 201, a first configuration sent by a base station is received.

The first configuration includes at least one first TDD UL-DL configuration applied to a first sub-band resource. The terminal further receives a second TDD UL-DL configuration sent by the base station, in which the second TDD UL-DL configuration represents a cell specific TDD UL-DL configuration.

As mentioned above, in the related art, after the terminal accesses the cell, the terminal receives a cell specific TDD UL-DL configuration in the SIB 1 message, that is, the second TDD UL-DL configuration here. On this basis, in the embodiments of the disclosure, the base station also sends the first TDD UL-DL configuration to the terminal, which is different from the second cell specific TDD UL-DL configuration, and the first TDD UL-DL configuration is applied to the first sub-band resource. The first sub-band resource includes a cell specific sub-band resource or a UE specific sub-band resource.

It should be noted that in actual applications, the first TDD UL-DL configuration and the second TDD UL-DL configuration can be sent by the base station via different configuration messages, or the base station can encapsulate the first TDD UL-DL configuration and the second TDD UL-DL configuration in a same configuration message for sending.

Multicast and Broadcast Services (MBS) is introduced in the 3rd Generation Partnership Project (3GPP) Release 17 (R17), and a concept of Common Frequency Resource (CFR) is defined. The CFR corresponds to a consecutive Common Resource Blocks (CRB) within a bandwidth part (BWP), and terminal receives broadcast services only in a range of frequency domain resources defined by the CFR. Therefore, in actual applications, the first TDD UL-DL configuration can be understood as a CFR specific TDD UL-DL configuration.

In an embodiment, receiving the first configuration sent by the base station includes: receiving the first configuration sent by the base station via a system message or a radio resource control (RRC) signaling, in which the system message includes an SIB message.

In an embodiment, the terminal applies the second TDD UL-DL configuration to a second sub-band resource, and the second sub-band resource represents a sub-band resource in a cell other than the first sub-band resource. For example, the sub-band resources are consecutive resources in the frequency domain. For example, the second sub-band resource can be a BWP. That is, except the first sub-band resource which applies the first TDD UL-DL configuration, other BWPs that have a resource overlap with or does not have a resource overlap with the first sub-band resource apply the second TDD UL-DL configuration. In this way, the base station can perform both UL and DL transmission simultaneously on different sub-bands of a TDD carrier.

In actual applications, the first configuration can be sent during an initial access stage of the terminal to the cell, or can be sent by the base station for the terminal in a connected state.

Before the terminal initially accesses to the cell, the base station configures the first TDD UL-DL configuration for the terminal. In this way, the configuration for sub-band wise full duplex and frequency fully overlapped full duplex can be realized in the initial access stage, combined with the cell specific TDD UL-DL configuration and the UE specific TDD UL-DL configuration. For example, configuring TDD-UL-DL-ConfigCommon is configured in the SIB 1 message to obtain the cell specific TDD UL-DL configuration, while both CFR and TDD-UL-DL-CFR corresponding to the CFR are configured in the SIB message to obtain the CFR specific TDD UL-DL configuration.

In an embodiment, the first sub-band resource is located inside a BWP; or the first sub-band resource is located outside the BWP. The BWP can be an initial DL/UL BWP or a non-initial BWP, including a BWP configured by the RRC.

For example, before the terminal initially accesses to the cell, the base station configures the second cell specific TDD UL-DL configuration as "DDDFU", and configures the first TDD UL-DL configuration as "UUUUU", in which D stands for a DL resource, U stands for a UL resource, and F stands for a flexible resource. As illustrated in FIG. 3, the first sub-band resource is located inside the initial DL/UL BWP. Since the cell specific TDD UL-DL configuration is applied to the initial DL/UL BWP, and the first TDD UL-DL configuration is applied to the first sub-band resource, there may be different transmission directions at different frequency domain positions in the same slot. For example, in the first three slots, UL transmission is performed on the first sub-band resource, while DL transmission is performed on other resources except for the first sub-band resource. As illustrated in FIG. 4, the first sub-band resource is outside the initial DL/UL BWP. Based on the above configuration, a waiting time of the terminal for the UL slot may be reduced and the random access rate may be improved.

In an embodiment, the first sub-band resource is configured for all UL transmission by the first configuration. That is, the first configuration includes at least one first TDD-UL-DL configuration applied to the first sub-band resource, which means that the first configuration is a configuration of the transmission direction of the first sub-band resource. Specifically, the first sub-band resource is configured for all UL transmission, that is, the all UL transmission configuration can be understood as a representation of a TDD-UL-DL configuration applied to the first sub-band resource. It should be noted that during the specific configuration, the TDD-UL-DL configuration is not limited to one TDD-UL-DL configuration signaling, but can refer to a configuration of the transmission direction for resources in the TDD system, where the transmission direction can be UL or DL. For example, one transmission direction configuration for the first sub-band resource in the TDD system is that it is for all UL transmission.

In an embodiment, the first sub-band resource is overlapped with the frequency domain resource of the first BWP.

It should be noted that the first sub-band resource can be located inside the first BWP, can also be located outside the first BWP, and can be completely overlapped with the first BWP, so as to realize the configuration to support a UL-DL transmission in the same slot at the same frequency.

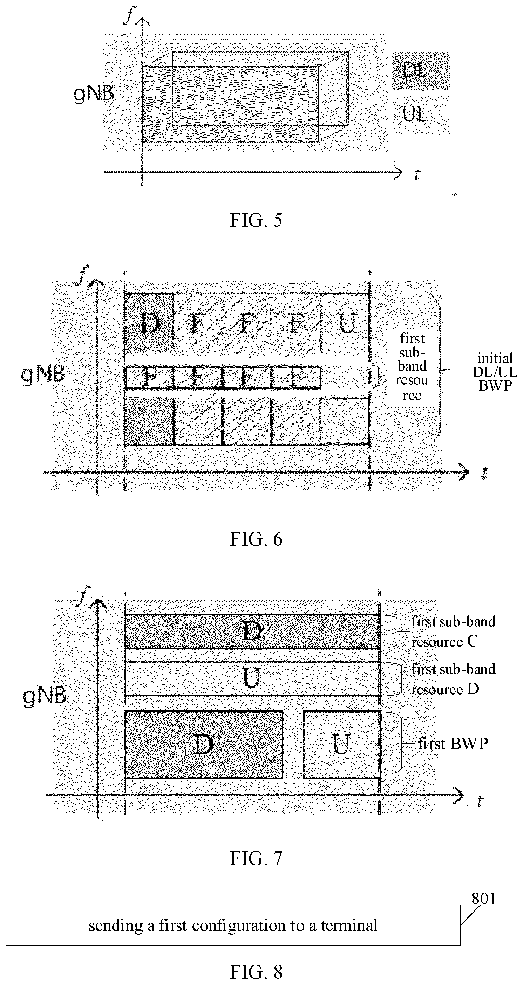

Referring to FIG. 5, the base station configures the second TDD-UL-DL configuration for the terminal as "DDDFU", and the base station configures the first TDD-UL-DL configuration for the terminal as "UUUUD". By configuring the same bandwidth for the first sub-band resource as the initial BWP, frequency fully overlapped full duplex in the same slot can be achieved .

As mentioned above, the TDD-UL-DL configuration in a period starts with a DL transmission and ends with a UL transmission, that is, only supporting a configuration way that the start of the TDD-UL-DL configuration is configured as D and the end of the TDD-UL-DL configuration is configured as U. Therefore, in actual applications, when both UL resource and DL resource exist in the TDD-UL-DL configuration, a slot offset needs to be introduced. Based on this, in an embodiment, the first configuration further includes a slot offset value, in which the slot offset value represents a slot offset of a period starting position of the first TDD-UL-DL configuration with respect to a period starting position of the second TDD-UL-DL configuration.

For example, the base station configures the second TDD-UL-DL configuration for the terminal as "DUUUU", and sets the slot offset value to 4. In this way, the period starting position of the second TDD-UL-DL configuration is offset by 4 slots from the period starting position of the first TDD-UL-DL configuration, that is, when the first TDD-UL-DL configuration is set as "DDFUU", the period starting slot D of the first TDD-UL-DL configuration is aligned with the fourth slot U in the period of the second TDD-UL-DL configuration.

Further, referring to FIG. 6, before the terminal initially accesses the cell, the base station configures the second TDD-UL-DL configuration for the terminal as "DFFFU", the first TDD-UL-DL configuration for the terminal as "FFFFU", and the first sub-band resource is located inside the initial DL/UL BWP. Since the second TDD-UL-DL configuration uses a flexible slot configuration, there is no need to additionally configure a slot offset value to achieve that DL transmission is performed in the first slot in the period of the TDD-UL-DL configuration of the initial BWP, and UL transmission is scheduled in the flexible slot inside the first sub-band resource via a base station scheduling mode.

In an embodiment, the first configuration further includes at least one first BWP associated with the first sub-band resource; when an active BWP of the terminal is the first BWP, the terminal applies the first TDD-UL-DL configuration to the first sub-band resource and applies the second TDD-UL-DL configuration to the first BWP.

For example, two first BWPs are configured for a first sub-band resource, namely, a first BWP A and a first BWP B. Since only one BWP can be activated at the same moment, when the active BWP of the terminal is the first BWP A, the terminal applies the second TDD-UL-DL configuration to the first BWP A and the first TDD-UL-DL configuration to the first sub-band resource. When the active BWP of the terminal is the first BWP B, the terminal applies the second TDD-UL-DL configuration to the first BWP B and applies the first TDD-UL-DL configuration to the first sub-band resource. In addition, for the case of configuring a plurality of first sub-band resources, referring to FIG.7 for an example of configuring two first sub-band resources, corresponding to a first sub-band resource C and a first sub-band resource D. For example, when the terminal is in the connected state, corresponding to the first BWP, the first TDD-UL-DL configuration of the first sub-band resource C only has DL resources, that is, DDDDD, and the first TDD-UL-DL configuration of the first sub-band resource D only has UL resources, that is, UUUUU. When the active BWP of the terminal is the first BWP, the terminal applies the first TDD-UL-DL configuration " DDDDD" to the first sub-band resource C, applies the first TDD-UL-DL configuration " UUUUU" to the first sub-band resource D, and applies the second TDD-UL-DL configuration to the first BWP.

In actual applications, this configuration not only supports terminals that cannot transmit and receive simultaneously, but also terminals that can transmit and receive simultaneously. The terminals that cannot transmit and receive simultaneously can obey the scheduling of the base station, so as to determine whether to work in the UL resource part or the DL resource part in the current slot. In addition, since the terminals that cannot transmit and receive simultaneously do not need to recognize the CFR, but to obey the scheduling of the base station, when the resources for the CFR part need to avoid interference from these terminals, a rate match pattern can be configured to avoid interference from these terminals to the UL part.

Corresponding to the method for resource configuration performed by the terminal in the embodiments of the disclosure, a method for resource configuration performed by the base station is provided. As illustrated in FIG. 8, the method includes the following step at 801.

At 801, a first configuration is sent to a terminal.

The first configuration includes at least one first TDD-UL-DL configuration applied to a first sub-band resource. In addition, the base station sends a second TDD-UL-DL configuration to the terminal, and the second TDD-UL-DL configuration represents a cell specific TDD-UL-DL configuration.

As mentioned above, in the related art, after the terminal accesses the cell, the terminal receives a cell specific TDD-UL-DL configuration in the SIB 1 message, that is, the second TDD-UL-DL configuration here. On this basis, in the embodiments of the disclosure, the base station also sends the first TDD-UL-DL configuration to the terminal, which is different from the second cell specific TDD-UL-DL configuration, and the first TDD-UL-DL configuration is applied to the first sub-band resource. The first sub-band resource includes a cell specific sub-band resource or a UE specific sub-band resource.

It should be noted that in actual applications, the first TDD-UL-DL configuration and the second TDD-UL-DL configuration can be sent by the base station via different configuration messages, or the base station can encapsulate the first TDD-UL-DL configuration and the second TDD-UL-DL configuration in a same configuration message.

In an embodiment, the terminal applies the second TDD-UL-DL configuration to a second sub-band resource, and the second sub-band resource represents a sub-band resource in a cell other than the first sub-band resource. The sub-band resource is consecutive resources in the frequency domain. For example, the second sub-band resource can be a BWP. That is, except that the first TDD UL-DL configuration is applied to the first sub-band resource, the second TDD UL-DL configuration is applied to remaining BWP that have a resource overlap with or does not have a resource overlap with the first sub-band resource. In this way, the base station can perform both UL and DL transmission simultaneously on different sub-bands of a TDD carrier.

In actual applications, the first configuration can be sent during an initial access stage of the terminal to the cell, or can be sent by the base station for the terminal in a connected state.

Before the terminal initially accesses to the cell, the base station configures the first TDD UL-DL configuration for the terminal. In this way, the configuration for sub-band wise full duplex and frequency fully overlapped full duplex can be realized in the initial access stage, combined with the cell specific TDD UL-DL configuration and the UE specific TDD UL-DL configuration.

In an embodiment, the first sub-band resource includes a cell specific sub-band resource or a UE specific sub-band resource.

In an embodiment, the first sub-band resource is located inside a BWP; or the first sub-band resource is located outside the BWP. The BWP can be an initial DL/UL BWP or a non-initial BWP, including a BWP configured by the RRC.

In an embodiment, the first configuration further includes a slot offset value, in which the slot offset value represents a slot offset of a period starting position of the first TDD-UL-DL configuration with respect to a period starting position of the second TDD-UL-DL configuration.

In an embodiment, sending the first configuration to the terminal includes: sending the first configuration to the terminal via a system message or an RRC signaling, in which the system message includes an SIB message.

In an embodiment, the first configuration further includes at least one first BWP associated with the first sub-band resource; when an active BWP of the terminal is the first BWP, the terminal applies the first TDD-UL-DL configuration to the first sub-band resource and applies the second TDD-UL-DL configuration to the first BWP.

As mentioned above, the TDD-UL-DL configuration in a period starts with a DL transmission and ends with a UL transmission, that is, only supporting a configuration way that the start of the TDD-UL-DL configuration is configured as D and the end of the TDD-UL-DL configuration is configured as U. Therefore, in actual applications, when both UL resource and DL resource exist in the TDD-UL-DL configuration, a slot offset needs to be introduced. Based on this, in an embodiment, the first sub-band resource is overlapped with a frequency domain resource of the first BWP.

In embodiments of the disclosure, the terminal receives the first configuration sent by the base station; in which the first configuration includes at least one first TDD-UL-DL configuration applied to the first sub-band resource; in addition, the terminal also receives the second TDD-UL-DL configuration sent by the base station; the second TDD-UL-DL configuration represents a cell specific TDD-UL-DL configuration. In this way, the terminal is configured with different TDD UL and DL configurations, corresponding to different sub-band resources. Based on this, the base station may carry out UL and DL transmissions simultaneously on different sub-bands of a TDD carrier, thus improving the UL coverage performance of the user and effectively reducing the service delay.

In order to realize the method for resource configuration performed by the terminal in the embodiments of the disclosure, there is provided an apparatus for resource configuration, which is arranged on or integrated into the terminal. The apparatus includes a first receiving unit 901.

The first receiving unit 901 is configured to receive a first configuration sent by a base station, in which the first configuration includes at least one first TDD-UL-DL configuration applied to a first sub-band resource.

The first receiving unit 901 is also configured to receive a second TDD-UL-DL configuration sent by the base station, in which the second TDD-UL-DL configuration represents a cell specific TDD-UL-DL configuration.

In an embodiment, the terminal applies the second TDD-UL-DL configuration to a second sub-band resource, and the second sub-band resource represents a sub-band resource in a cell other than the first sub-band resource.

In an embodiment, the first sub-band resource includes a cell specific sub-band resource or a UE specific sub-band resource.

In an embodiment, the first sub-band resource is located inside a BWP; or, the first sub-band resource is located outside the BWP.

In an embodiment, the first configuration further includes a slot offset value, in which the slot offset value represents a slot offset of a period starting position of the first TDD-UL-DL configuration with respect to a period starting position of the second TDD-UL-DL configuration.

In an embodiment, the first receiving unit 901 is configured to receive a first configuration sent by the base station via a system message or an RRC signaling.

In an embodiment, the first configuration further includes at least one first BWP associated with the first sub-band resource; when an active BWP of the terminal is the first BWP, the terminal applies the first TDD-UL-DL configuration to the first sub-band resource and applies the second TDD-UL-DL configuration to the first BWP.

In an embodiment, the first sub-band resource is overlapped with a frequency domain resource of the first BWP.

In actual applications, the first receiving unit 901 can be realized by a communication interface in the apparatus for resource configuration.

In order to realize the method for resource configuration performed by the base station in the embodiments of the disclosure, there is provided an apparatus for resource configuration, which is arranged on or integrated into the base station. The apparatus includes a first sending unit 1001.

The first sending unit 1001 is configured to send a first configuration to a terminal, in which the first configuration includes at least one first TDD-UL-DL configuration applied to a first sub-band resource.

The first sending unit is also configured to send a second TDD-UL-DL configuration to the terminal, in which the second TDD-UL-DL configuration represents a cell specific TDD-UL-DL configuration.

In an embodiment, the terminal applies the second TDD-UL-DL configuration to a second sub-band resource, and the second sub-band resource represents a sub-band resource in a cell other than the first sub-band resource.

In an embodiment, the first sub-band resource includes a cell specific sub-band resource or a UE specific sub-band resource.

In an embodiment, the first sub-band resource is located inside a BWP; or, the first sub-band resource is located outside the BWP.

In an embodiment, the first configuration further includes a slot offset value, in which the slot offset value represents a slot offset of a period starting position of the first TDD-UL-DL configuration with respect to a period starting position of the second TDD-UL-DL configuration.

In an embodiment, the sending unit 1001 is configured to send the first configuration to the terminal via a system message or an RRC signaling.

In an embodiment, the first configuration further includes at least one first BWP associated with the first sub-band resource; when an active BWP of the terminal is the first BWP, the terminal applies the first TDD-UL-DL configuration to the first sub-band resource and applies the second TDD-UL-DL configuration to the first BWP.

In an embodiment, the first sub-band resource is overlapped with a frequency domain resource of the first BWP.

In actual applications, the first sending unit 1001 can be realized by a communication interface in the apparatus for resource configuration.

It should be noted that when the apparatus for resource configuration in embodiments of the disclosure configures resources, the division of the above program modules is illustrated as example. In actual applications, the above processing and allocation can be completed by different program modules according to different needs, that is, the internal structure of the apparatus is divided into different program modules to complete all or part of the processing described above. In addition, the apparatus for resource configuration and the method for resource configuration in the embodiments belong to the same concept. For specific implementation process, please refer to the method embodiments, which will not be repeated here.

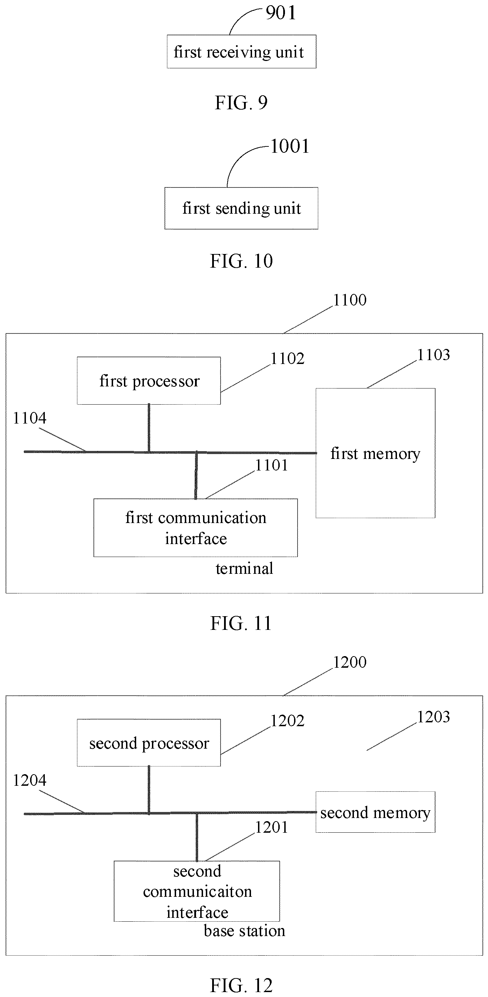

Based on the above hardware implementation using the program modules, in order to realize the method for resource configuration performed by the terminal in embodiments of the disclosure, there is provided a terminal, as illustrated in FIG. 11, the terminal 1100 includes a first communication interface 1101 and a processor 1102.

The first communication interface 1101 is configure to exchange information with other network nodes.

The first processor 1102 is connected with the first communication interface 1101 to achieve information interaction with other network nodes for executing the methods in one or more technical solutions on the terminal side when a computer program is running. The computer program is stored on the first memory 1103.

Specifically, the first communication interface 1101 is configured to receive a first configuration sent by a base station, in which the first configuration includes at least one first TDD-UL-DL configuration applied to a first sub-band resource; and the first communication interface 1101 is configured to receive a second TDD-UL-DL configuration sent by the base station, in which the second TDD-UL-DL configuration represents a cell specific TDD-UL-DL configuration.

In an embodiment, the terminal applies the second TDD-UL-DL configuration to a second sub-band resource, and the second sub-band resource represents a sub-band resource in a cell other than the first sub-band resource.

In an embodiment, the first sub-band resource includes a cell specific sub-band resource or a UE specific sub-band resource.

In an embodiment, the first sub-band resource is located inside a BWP; or, the first sub-band resource is located outside the BWP.

In an embodiment, the first configuration further includes a slot offset value, in which the slot offset value represents a slot offset of a period starting position of the first TDD-UL-DL configuration with respect to a period starting position of the second TDD-UL-DL configuration.

In an embodiment, the sending unit 1001 is configured to receive the first configuration sent by the base station via a system message or an RRC signaling.

In an embodiment, the first configuration further includes at least one first BWP associated with the first sub-band resource; when an active BWP of the terminal is the first BWP, the terminal applies the first TDD-UL-DL configuration to the first sub-band resource and applies the second TDD-UL-DL configuration to the first BWP.

In an embodiment, the first sub-band resource is overlapped with a frequency domain resource of the first BWP.

It should be noted that the specific process of the first processor 1102 and the first communication interface 1101 can be understood according to the above method.

In actual applications, the components in the terminal 1100 are coupled together by a bus system 1104. It may be understood that the bus system 1104 is used to implement a connection communication between these components. In addition to data buses, the bus system 1104 also includes a power bus, a control bus and a status signal bus. However, for clarity, each bus is labeled as the bus system 1104 in FIG. 11.

The first memory 1103 in the embodiments of the disclosure is configured to store various types of data to support the operation of the terminal 1100. Examples of such data include any computer program used to operate on the terminal 1100.

The method in the embodiments of the disclosure may be applied to, or implemented by, the first processor 1102. The first processor 1102 may be an integrated circuit chip with a signal processing capability. In the implementation process, each step of the method can be completed by an integrated logic circuit in the form of hardware or the instructions in the form of software in the first processor 1102. The first processor 1102 may be a general-purpose processor, a digital signal processor (DSP), or other programmable logic device, a discrete gate or transistor logic device, a discrete hardware component, etc. The first processor 1102 can perform or execute the methods, steps and logic block diagrams disclosed in the embodiments of the disclosure. A general-purpose processor can be a microprocessor or any regular processor. The steps in combination with the method in the embodiments of the disclosure may be executed by a hardware decoding processor, or by a combination of hardware and software modules in the decoding processor. The software module may be located in a storage medium, and the storage medium is located in the first memory 1103. The first processor 1102 reads the information in the first memory 1103 and completes the steps of the above method in combination with its hardware.

In exemplary embodiments, the terminal 1100 may perform the above methods by one or more application specific integrated circuits (ASIC), DSPs, programmable logic devices (PLDs), complex programmable logic devices (CPLDs), field programmable gate arrays (FPGAs), general-purpose processors, controllers, micro controller units (MCUs), microprocessors, or other electronic components.

Based on the above hardware implementation using the program modules, in order to realize the method performed by the base station in embodiments of the disclosure, there is provided a base station, as illustrated in FIG. 12, the base station 1200 includes a second communication interface 1201 and a second processor 1202.

The second communication interface 1201 is configure to exchange information with other network nodes.

The second processor 1202 is connected with the second communication interface 1201 to achieve information interaction with other network nodes for executing the methods in one or more technical solutions on the base station side when a computer program is running. The computer program is stored on the second memory 1203.

Specifically, the second communication interface 1201 is configured to send a first configuration to a terminal, in which the first configuration includes at least one first TDD-UL-DL configuration applied to a first sub-band resource; and send a second TDD-UL-DL configuration to the terminal, in which the second TDD-UL-DL configuration represents a cell specific TDD-UL-DL configuration.

In an embodiment, the terminal applies the second TDD-UL-DL configuration to a second sub-band resource, and the second sub-band resource represents a sub-band resource in a cell other than the first sub-band resource.

In an embodiment, the first sub-band resource includes a cell specific sub-band resource or a UE specific sub-band resource.

In an embodiment, the first sub-band resource is located inside a BWP; or, the first sub-band resource is located outside the BWP.

In an embodiment, the first configuration further includes a slot offset value, in which the slot offset value represents a slot offset of a period starting position of the first TDD-UL-DL configuration with respect to a period starting position of the second TDD-UL-DL configuration.

In an embodiment, the second communication interface 1201 is configured to send the first configuration to the terminal via a system message or an RRC signaling.

In an embodiment, the first configuration further includes at least one first BWP associated with the first sub-band resource; when an active BWP of the terminal is the first BWP, the terminal applies the first TDD-UL-DL configuration to the first sub-band resource and applies the second TDD-UL-DL configuration to the first BWP.

In an embodiment, the first sub-band resource is overlapped with a frequency domain resource of the first BWP.

It should be noted that the specific process of the second processor 1202 and the second communication interface 1201 can be understood according to the above method.

In actual applications, the components in the terminal 1200 are coupled together by a bus system 1204. It may be understood that the bus system 1204 is used to implement a connection communication between these components. In addition to data buses, the bus system 1204 also includes a power bus, a control bus and a status signal bus. However, for clarity, each bus is labeled as the bus system 1204 in FIG. 12.

The first memory 1203 in the embodiments of the disclosure is configured to store various types of data to support the operation of the terminal 1200. Examples of such data include any computer program used to operate on the terminal 1200.

The method in the embodiments of the disclosure may be applied to, or implemented by, the second processor 1202. The first processor 1202 may be an integrated circuit chip with a signal processing capability. In the implementation process, each step of the method can be completed by an integrated logic circuit in the form of hardware or the instructions in the form of software in the second processor 1202. The second processor 1202 may be a general-purpose processor, a digital signal processor (DSP), or other programmable logic device, a discrete gate or transistor logic device, a discrete hardware component, etc. The second processor 1202 can perform or execute the methods, steps and logic block diagrams disclosed in the embodiments of the disclosure. A general-purpose processor can be a microprocessor or any regular processor. The steps in combination with the method in the embodiments of the disclosure may be executed by a hardware decoding processor, or by a combination of hardware and software modules in the decoding processor. The software module may be located in a storage medium, and the storage medium is located in the second memory 1203. The second processor 1202 reads the information in the second memory 1203 and completes the steps of the above method in combination with its hardware.

In exemplary embodiments, the base station 1200 may perform the above methods by one or more application specific integrated circuits (ASIC), DSPs, PLDs, CPLDs, FPGAs, general-purpose processors, controllers, MCUs, microprocessors, or other electronic components.

It may be understood that the memory in the embodiments of the disclosure (the first memory 1103 and the second memory 1203) may be a volatile memory or a non-volatile memory, and may include both the volatile memory and the non-volatile memory. The non-volatile memory can be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disc, or a compact disc read-only memory (CD-ROM). The magnetic surface memory can be a disk memory or a magnetic tape memory. The volatile memory can be a random access memory (RAM), which is used as an external cache. By illustrative but not restrictive description, many forms of RAM are available, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synclink dynamic random access memory (SLDRAM), and a direct rambus random access memory (DRRAM). The memory in the embodiments of the disclosure is intended to include, but is not limited to, these and any other suitable type of memory.

In an exemplary embodiment, the embodiments of the disclosure also provides a storage medium, that is, a computer storage medium, specifically a computer-readable storage medium. For example, the computer-readable storage medium includes the first memory 1103 for storing a computer program. The computer program may be executed by the first processor 1102 of the terminal 1100 to complete the steps in the above method performed by the terminal. For another example, the computer-readable storage medium includes the second memory 1203 for storing a computer program. The computer program may be executed by the second processor 1202 of the base station 1200 to complete the steps in the above method performed by the base station. For another example, the computer-readable storage medium includes the third memory 1403 for storing a computer program. The computer program may be executed by a third processor 1402 on a second network node 1400 to complete the steps in the above method performed by the second network node. The computer-readable storage media can be an FRAM, an ROM, a PROM, an EPROM, an EEPROM, a Flash Memory, a magnetic surface memory, an optical disc, or a CD-ROM memory.

It should be noted that "first", "second", etc., are used to distinguish similar objects and are not necessarily used to describe a specific order or precedence.

In this disclosure, the term "and/or" is only an association relation describing an associated object, indicating that there can be three kinds of relations, for example, A and/or B can be represented as the following three conditions: there is A, there is A and B simultaneously, and there is B. In addition, the term "at least one" in this disclosure means any combination of any one of many or at least two of many, for example, including at least one of A, B, or C, and may mean any one or a plurality of elements selected from the set including A, B, and C.

In addition, the technical solutions in the embodiments of the disclosure may be arbitrarily combined, provided that there is no conflict between them.

The foregoing is only a preferred embodiment of this disclosure and is not to limit the scope of protection of this disclosure.

## Claims

1. A method for resource configuration, performed by a terminal, comprising:
receiving a first configuration sent by a base station, wherein the first configuration comprises at least one first time division duplex (TDD)-uplink (UL)-downlink (DL) configuration applied to a first sub-band resource; and
receiving, by the terminal, a second TDD-UL-DL configuration sent by the base station, wherein the second TDD-UL-DL configuration represents a cell specific TDD-UL-DL configuration.

2. The method according to claim 1, wherein the terminal applies the second TDD-UL-DL configuration to a second sub-band resource, and the second sub-band resource represents a sub-band resource in a cell other than the first sub-band resource.

3. The method according to claim 1, wherein the first sub-band resource comprises a cell specific sub-band resource or a user equipment (UE) specific sub-band resource.

4. The method according to claim 1, wherein,
the first sub-band resource is located inside a bandwidth part (BWP); or,
the first sub-band resource is located outside the BWP.

5. The method according to claim 1, wherein the first configuration further comprises a slot offset value, wherein the slot offset value represents a slot offset of a period starting position of the first TDD UL-DL configuration with respect to a period starting position of the second TDD UL-DL configuration.

6. The method according to claim 1, wherein receiving the first configuration sent by the base station comprises:
receiving the first configuration sent by the base station via a system message or a radio resource control (RRC) signaling.

7. The method according to claim 1, wherein the first configuration further comprises at least one first bandwidth part (BWP) associated with the first sub-band resource; and
when an active BWP of the terminal is the first BWP, the terminal applies the first TDD UL-DL configuration to the first sub-band resource and applies the second TDD UL-DL configuration to the first BWP.

8. The method according to claim 7, wherein the first sub-band resource is overlapped with a frequency domain resource of the first BWP.

9. The method according to claim 1, wherein the first sub-band resource is configured for all UL transmission by the first configuration.

10. A method for resource configuration, performed by a base station, comprising:
sending a first configuration to a terminal, wherein the first configuration comprises at least one first time division duplex (TDD)-uplink (UL)-downlink (DL) configuration applied to a first sub-band resource; and
sending, by the base station, a second TDD-UL-DL configuration to the terminal, wherein the second TDD-UL-DL configuration represents a cell specific TDD-UL-DL configuration.

11. The method according to claim 10, wherein the terminal applies the second TDD-UL-DL configuration to a second sub-band resource, and the second sub-band resource represents a sub-band resource in a cell other than the first sub-band resource.

12. The method of claim 10, wherein the first sub-band resource comprises a cell specific sub-band resource or a user equipment (UE) specific sub-band resource.

13. The method of claim 10, wherein,
the first sub-band resource is located inside a bandwidth part (BWP); or,
the first sub-band resource is located outside the BWP.

14. The method of claim 10, wherein the first configuration further comprises a slot offset value, wherein the slot offset value represents a slot offset of a period starting position of the first TDD-UL-DL configuration with respect to a period starting position of the second TDD-UL-DL configuration.

15. The method of claim 10, wherein sending the first configuration to the terminal comprises:
sending the first configuration to the terminal via a system message or a radio resource control (RRC) signaling.

16. The method of claim 10, wherein the first configuration further comprises at least one first bandwidth part (BWP) associated with the first sub-band resource;
when an active BWP of the terminal is the first BWP, the terminal applies the first TDD-UL-DL configuration to the first sub-band resource and applies the second TDD-UL-DL configuration to the first BWP.

17. The method of claim 16, wherein the first sub-band resource is overlapped with a frequency domain resource of the first BWP.

18. An apparatus for resource configuration, comprising:
a first receiving unit, configured to receive a first configuration sent by a base station, wherein the first configuration comprises at least one first time division duplex (TDD)-uplink (UL)-downlink (DL) configuration applied to a first sub-band resource;
wherein the first receiving unit is configured to receive a second TDD-UL-DL configuration sent by the base station, wherein the second TDD-UL-DL configuration represents a cell specific TDD-UL-DL configuration.

19. An apparatus for resource configuration, comprising:
a first sending unit, configured to send a first configuration to a terminal, wherein the first configuration comprises at least one first time division duplex (TDD)-uplink (UL)-downlink (DL) configuration applied to a first sub-band resource;
wherein the first sending unit is configured to send a second TDD-UL-DL configuration to the terminal, and the second TDD-UL-DL configuration represents a cell specific TDD-UL-DL configuration.

20. A terminal, comprising: a first processor and a communication interface; wherein,
the first communication interface is configured to receive a first configuration sent by a base station, wherein the first configuration comprises at least one first (TDD)-uplink (UL)-downlink (DL) configuration applied to a first sub-band resource;
and
the first communication interface is configured to receive a second TDD-UL-DL configuration sent by the base station, wherein the second TDD-UL-DL configuration represents a cell specific TDD-UL-DL configuration.

21. A base station, comprising: a second processor and a second communication interface; wherein,
the second communication interface is configured to send a first configuration to a terminal, wherein the first configuration comprises at least one first time division duplex (TDD)-uplink (UL)-downlink (DL) configuration applied to a first sub-band resource; and
the second communication interface is configured to send a second TDD-UL-DL configuration to the terminal, and the second TDD-UL-DL configuration represents a cell specific TDD-UL-DL configuration.

22. A terminal, comprising: a first processor and a first memory for storing a computer program that can be executed by the processor, wherein when the computer program is executed by the first processor, the steps of the method according to any one of claims 1 to 9 are executed.

23. A base station, comprising: a second processor and a second memory for storing a computer program that can be executed by the processor, wherein when the computer program is executed by the second processor, the steps of the method according to any one of claims 10 to 17 are executed.

24. A storage medium on which a computer program is stored, wherein when the computer program is executed by a processor, the steps of the method according to any one of claims 1 to 9, or the steps of the method according to any one of claims 10 to 17 are executed.
